# EUROPÄISCHE PATENTSCHRIFT

(11) **EP 1 550 696 B1**
(45) Veröffentlichungstag und Bekanntmachung des Hinweises auf die Patenterteilung: **29.11.2006**
(21) Anmeldenummer: 04107046.7
(22) Anmeldetag: 29.12.2004
(51) Int. Cl.: C08L 77/00, C08K 5/17

(54) **Thermoplastische Polyamid-Formmassen**
Thermoplastic polyamide moulding compositions
Masses à mouler thermoplastiques à base de polyamide

(30) Priorität: 30.12.2003 DE 10361712
(43) Veröffentlichungstag der Anmeldung: 06.07.2005
(73) Patentinhaber: EMS-Chemie AG, 7013 Domat/Ems (CH)
(72) Erfinder: Schmid, Eduard Dr.sc.nat., 7402, Bonaduz (CH); Rexin, Ornulf Dr.rer.nat., 7013 Domat/Ems (CH)
(74) Vertreter: Becker Kurig Straus

(56) Entgegenhaltungen:
- EP-A- 0 469 542
- WO-A-20/05000953
- US-A- 5 756 647

## Beschreibung

Die vorliegende Erfindung betrifft thermoplastische Polyamid-Formmassen sowie ein Verfahren zur Herstellung der Formmassen. Insbesondere betrifft die vorliegende Erfindung thermoplastische Polyamid-Formmassen auf Basis von Polyamid 12, die zur Weiterverarbeitung durch Spritzguss oder Extrusion bestimmt sind und bei der thermoplastischen Umformung keine Feststoffablagerungen entstehen lassen. Die vorliegende Erfindung betrifft ganz besonders bevorzugt thermoplastische Polyamid 12-Formmassen auf der Basis von hydrolytisch hergestelltem Polyamid 12, die keine der sonst üblichen Feststoffablagerungen bei der Verarbeitung im Spritzguss oder in der Extrusion ergeben.

Polyamid 12 (PA 12) ist der Polyamid-Typ, der sich durch ein speziell interessantes Eigenschaftsprofil auszeichnet. So lässt sich Polyamid 12 auf die verschiedensten Arten modifizieren, und die resultierenden Formmassen sind danach ausgezeichnet thermoplastisch im Spritzguss und in Extrusionsprozessen zu Gebrauchsgegenständen von hohem Praxiswert umformbar. Polyamid 12 entspricht insgesamt dem Polyamid-Typ, dessen Eigenschaften im Praxisgebrauch bei Änderung von Temperatur und Feuchte am wenigsten beeinflusst werden.

Ein Problem ist aber, dass beim üblichen, hydrolytischen Polymerisationsprozess/Autoklavenprozess der Monomerumsatz nur zu ca. 99,5 % erfolgt und das verbleibende Restlactam im Polymer schwerlöslich ist, so dass es insbesondere beim Verarbeiten aus der Schmelze, aber auch im späteren Praxisgebrauch zum Ausschwitzen und Sublimieren von Lactam 12 (LC12), insbesondere auf gekühlte Flächen, z. B. die Oberflächen der Werkzeuge und der Fertigteile, und damit zu Belagsbildung kommt. Insbesondere wegen des hohen Schmelzpunktes von Lactam 12 bilden solche Sublimate oft störende Ablagerungen, die insbesondere dann, wenn weitere Zusätze an die Oberfläche migrieren, Anlass zu Prozessstörungen mit Oberflächenbeschädigungen und damit zu Produktionsunterbrüchen führen können und sich auch sogenannte "Black-Spots" bilden können. Bekannte Maßnahmen zur Reduktion und Eliminierung des Lactam 12 - Restgehaltes sind z.B., die Schmelze- und die FestphasenNachkondensation mit Vakuumeinwirkung sowie Flüssigextraktionsprozesse oder die Umfällung aus alkoholischer Lösung. Auch diese Prozesse, bei denen sich Lactam unter Wärmeeinwirkung verflüchtigt, können durch das Lactamsublimat gestört werden. Zudem sind Lactamnebel leichtentzündlich, und die Prozesse bedürfen spezieller Vorsichtsmassnahmen. Zudem kann die zusätzliche thermische Belastung das Polymer schädigen. Bei der thermoplastischen Verarbeitung von Polyamid 12 (PA12) - Formmassen im Spritzgussverfahren und in der Extrusion ist die Bildung von Feststoffablagerungen, die insbesondere aus Lactam 12 (LC 12) bestehen, nachteilig.

Die US 6,506,830 B1 beschreibt antistatische Polyamid-Formmassen mit den im Stand der Technik üblichen und bekannten Weichmachern. Auch die Weichmacher-Konzentrationen entsprechen den üblich eingesetzten hohen Weichmacher-Konzentrationen (siehe Anspruch 9; bis zu 30 Gew.-%). Obwohl in der US 6,506,830 B1 in Anspruch 9 eine Weichmachermenge von bis zu 30 Gew.-% angesprochen wird und somit theoretisch alle Konzentrationsbereiche mitumfasst sind, ist aus der Literatur bekannt, dass geringe Weichmacherzusätze aufgrund des sogenannten Anti-Weichmacher-Effektes eher als kontraproduktiv im Hinblick auf eine Verbesserung der Materialeigenschaften gesehen werden. Im gleichen Kontext wie die Weichmacher werden aber auch Lactame genannt, die als Ursache für die Entstehung von Ablagerungen verantwortlich sind.

In der EP 0 748 847 A2 werden übliche weichmacherhaltige Polyamid-Formmassen beschrieben, welche erkennbar sind an den hohen Weichmacher-Konzentrationen (bevorzugt 8 bis 20 Gew.-%). Darüber hinaus wird die vorteilhafte Verwendung von Weichmachermischungen beschrieben. Bei den aufgeführten Weichmachern sind auch Sulfonamide und Hydroxybenzoate aufgeführt. Die EP 0 748 847 A2 beschränkt sich aber auf die Flexibilisierung und die Kälteschlagfestigkeit von Polyamiden. Zur Ablagerungsproblematik wird nichts erwähnt. Im Gegensatz dazu wird aber das Verdampfen des Weichmachers als Nachteil aufgeführt (vgl. S. 2, Z. 58 bis S. 3, Z. 3). In der EP 0 748 847 A2 wird zwar von der Oberfläche des Formteils gesprochen, aber nur im Zusammenhang mit einer sogenannten "non tacky surface", die in keiner Verbindung zur beschriebenen Ablagerungsproblematik steht. Ansonsten wird bei den Weichmachern das Hauptaugenmerk auf die Einfriertemperatur gelegt. Auf die Eigenschaften bei Raumtemperatur oder höherer Temperatur, welche für die Löslichkeit der Polyamid-spezifischen Ablagerungen erforderlich sind, wird dagegen nicht eingegangen.

Die WO 2005/000953 A2 beschreibt Polyamid-Formmassen, die hydroxylfunktionalisierte, sterisch gehinderte Amine als Additive enthalten. Diese Additive sind wenig flüchtig und erhöhen aufgrund ihrer hohen Fließfähigkeit die Verarbeitbarkeit der Formmassen in Spritzguss- und Extrusionsverfahren.

Die WO 97/10303 verwendet zur Verbesserung der Verschweißbarkeit oder zur Erhöhung der Bindenahtfestigkeit von Polyamid-Formmassen Weichmacher in Konzentrationen bis zu 5 Gew.-%. Es werden auch Sulfonamide eingesetzt. Im gleichen Kontext wie die Verwendung der Weichmacher werden aber auch Lactame genannt (vgl. S. 4, Z. 35 bis 36). Gerade aber die Lactame sind als Ursache für die Ablagerungen verantwortlich.

Die WO 01/05888 beschreibt Formmassen, die neben Polyacetal auch Flammschutzmittel und N-haltige Verbindungen enthalten, die auch niedermolekular sein können. Zu diesen Verbindungen gehören auch Sulfonamide und Harnstoffderivate. Die N-haltigen Verbindungen verstärken die Flammwidrigkeit und erhöhen die Stabilität der beschriebenen Formmassen. In ihrer Funktion als Stabilisator werden Konzentrationen von bis zu 2,5 Gew.-% eingesetzt.

In der EP 0 469 542 A2 werden Formmassen beschrieben, die bis zu 20 Gew.-Teilen einer Carbonsäure mit mindestens zwei Carboxylgruppen bzw. eines Derivats davon und/oder eines Amins mit mindestens zwei Stickstoffatomen und/oder Harnstoff bzw. eines Harnstoffderivats zur Verbesserung der Fließeigenschaften enthält.

Gemäß der WO 01/05888 müssen die Formmassen aber immer Polyacetal enthalten und D4 enthält keinen Hinweis auf die beschriebene Ablagerungsproblematik. Dies ist auch einleuchtend, denn Polyamide können in Polyacetal enthalten sein aber spielen dort nie eine dominante Rolle.

Die EP 0 388 583 A1 zielt auf die Tatsache, die durch Weichmachung verschlechterte Kälteschlagzähigkeit der Polyamid 12-Formmassen durch bestimmte Polyamide wieder auszugleichen. Hier werden übliche weichmacherhaltige Polyamid-Formmassen mit bis 25 Gew.-% Weichmachern beschrieben.

Erwünscht sind somit einfache, kostenwirksame Maßnahmen zur Vermeidung der Bildung von Feststoffablagerungen bei der thermoplastischen Verarbeitung von PA-Formmassen, die auf Polyamid 12 oder auch einem Copolymer bzw. Polyamid, das Polyamid 12-Bausteine mitenthält, basieren.

Aufgabe der vorliegenden Erfindung ist es daher, thermoplastische Polyamid-Formmassen bereitzustellen, bei denen bei der thermoplastischen Umformung keine Feststoffablagerungen entstehen.

Die Aufgabe wird erfindungsgemäß durch Bereitstellung thermoplastischer Formmassen gemäß Anspruch 1 erreicht.

Die erfindungsgemäßen thermoplastischen Polyamid-Formmassen enthalten mindestens 20 Gew.-% Polyamid 12, bezogen auf die Polyamidmatrix-Komponente, und/oder ein Copolymer mit mindestens 20 Gew.-% Polyamid 12-Bausteinen, bezogen auf die Polyamidmatrix-Komponente, und mindestens eine aprotische Verbindung aus der Gruppe der N-alkylierten, cyclischen Carbonsäureamide mit 5 bis 7 Ringgliedern. Durch die Mitverwendung dieser speziellen aprotischen Verbindung wird zwar nicht die Sublimation des in Polyamid 12 verbliebenen Restlactams verhindert, aber die zusätzlichen Rezepturbestandteile sind in der Lage, das Lactam zu verflüssigen.

Die thermoplastischen Polyamid-Formmassen sind insbesondere thermoplastische Polyamid 12-Formmassen auf Basis von hydrolytisch hergestelltem Polyamid 12 oder auf Basis von Polyamid 12-Blockcopolymeren, die Polyester-, Polyether-, Polysiloxan-, Polycarbonat-, Polyacrylat-, Polymethacrylat- oder Polyolefinsegmente als weitere Bausteine neben einem Anteil von mindestens 20 % Polyamid 12-Bausteinen enthalten können.

Vorteilhafte Ausführungsformen sind in den Unteransprüchen beschrieben.

Anteile an aprotischer Verbindung, aber auch Lactam, die während der Verarbeitung an die Prüfteiloberfläche migrieren, erfahren im Temperaturbereich von z.B. 50 - 100°C, also bei Bedingungen entsprechend üblichem Praxisgebrauch, Rückdiffusion in die Polyamid-Formmasse, was als erwünschtes Verhalten zu betrachten ist. Man kann sich dieses unerwartete Ergebnis so erklären, dass sich die aprotische Verbindung, insbesondere N-Octylpyrrolidon, wie der sonst üblicherweise Polyamid 12 - Weichmacher, N, N- Dibutylbenzolsulfonamid oder N, N-Dibutyltoluolsulfonamid, in der Polyamid 12-Matrix löst und, da N-Octylpyrrolidon auch Lactam 12 zu lösen vermag, dessen Rückdiffusion in die Matrix ermöglicht. Die aprotische Verbindung wirkt so, dass die Sublimation von Lactam 12 zwar nicht unterbunden ist, sich aber anstelle von Feststoffablagerungen feine und farblose und niederviskose Tröpfchen bilden, die spontan wegfließen, leicht weggewischt werden können oder, wenn sie auf der Oberfläche verbleiben, auch in die Masse zurückdiffundieren.

Damit kann nun das Problem der Feststoffablagerungen bei Polyamid 12 - Formmassen und Copolymeren, die mindestens 20 Gew.-% Polyamid 12-Bausteine bzw. Komponenten, bezogen auf die Polyamidmatrix-Komponente, enthalten, über eine reine Rezepturergänzung für technische Anwendungen weitgehend gelöst werden. Damit sind keine zusätzlich durchzuführenden Verfahrensschritte und damit auch keine zusätzliche thermische Belastung der Formmassen notwendig. Zudem kann die neu als Zusatz zu Polyamid 12-haltigen (Co)Polyamiden beschriebene aprotische Verbindung wertvolle Zusatzaufgaben im Polyamid 12 übernehmen. Sie wirkt zähigkeitserhöhend und bei Zugabe in genügender Menge weichmachend für das Polyamid, wobei sie auch in Kombination mit den sonst üblichen Benzol- oder Toluosulfonsäureamid-Weichmachem für Polyamid, wie N, N- Dibutylbenzolsulfonamid (BBSA) und/oder N,N-Dibutyltoluolsulfonamid, gemeinsam eingesetzt werden kann.

Mischungen von zwei oder mehreren aprotischen Verbindungen oder Mischungen mindestens einer aprotischen Verbindung mit einem eingesetzten Weichmacher weisen im Vergleich zu den Einzelkomponenten tiefere Glastemperaturen auf und sorgen so zusätzlich für eine verbesserte Tieftemperaturzähigkeit der verarbeiteten Polyamid-Formmassen.

Die aprotische Verbindung verhindert insbesondere bei einer Zugabemenge von 0,05 bis 3,0 Gew.-% in der Polyamidmatrix-Komponente die Bildung von Feststoffablagerungen wirksam, die insbesondere durch Lactam 12 bedingt ist. Bevorzugt sind Zugabemengen von 0,1 bis 3,0 Gew.-%, besonders bevorzugt sind Zugabemengen von 0,15 bis 1,0 Gew.-%.

Eine aprotische Verbindung aus der Gruppe der N-alkylierten, cyclischen Carbonsäureamide mit 5 - 7 Ringgliedern entspricht vorzugsweise einem Carbonsäureamid der Formel I: 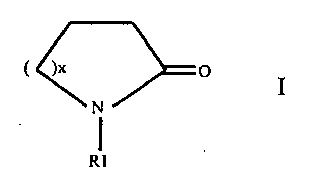 wobei x 1 bis 3 ist und R1 ein Octyl-Rest ist. Der Octyl-Rest kann linear, verzweigt oder cyclisch sein und kann gegebenenfalls Heteroatome oder Heterogruppen enthalten oder eine Verknüpfung der beiden N-Atome bilden. Geeignete Verbindungen sind N-Octylpyrrolidon und N-Octylcaprolactam.

N-Octylpyrrolidon ist als erfindungsgemäßer Zusatz speziell geeignet. So weisen Lactam 12 und N-Octylpyrrolidon beide ein Molgewicht von 197 g/mol auf und beide sind cyclische Amide. Weiterhin verflüchtigen sich N-Octylpyrrolidon und Lactam 12 in ca. demselben Temperaturbereich. Während sich N-Octylpyrrolidon bei hoher Temperatur verflüchtigt, erfolgt im Temperaturbereich von 100 bis 150°C Rückdiffusion in die Polyamid 12- Matrix. Ein wesentlicher Unterschied der zwei Verbindungen ist der Schmelzpunkt. So weist Lactam 12 einen Schmelzpunkt von 150 °C auf und ist somit ein Feststoff bei Raumtemperatur, während N-Octylpyrrolidon eine Flüssigkeit bei Raumtemperatur ist und einen Schmelzpunkt von -26 °C aufweist. Eine wesentliche Eigenschaft von N-Octylpyrrolidon im Hinblick auf die vorliegende Erfindung ist, dass es fähig ist, Lactam 12 zu lösen bzw. zu verflüssigen. N-Octylcaprolactam zeigt ein ähnliches Verhalten wie N-Octylpyrrolidon, bei etwas geringerer Löslichkeit für das Lactam.

Damit gewährleistet ist, dass sich beim Verarbeiten Tröpfchen und keine Feststoffablagerungen bilden, ist nicht nur eine ausreichende Löslichkeit von Lactam in der aprotischen Verbindung erforderlich, sondern ebenso entscheidend sind eine dem Lactam angepasste Flüchtigkeit der aprotischen Verbindung, eine hinreichende Löslichkeit in der PA12-Matrix sowie ein günstiges Migrationsverhalten. Vorteilhaft ist eine leicht höhere Flüchtigkeit der aprotischen Verbindung in Relation zum Lactam. Die Flüchtigkeit darf aber keinesfalls zu hoch sein, damit die Vorteile hinsichtlich der Ablagerungsproblematik nicht durch die Nachteile einer zu starken Emissionsbildung mehr als kompensiert werden.

Die erfindungsgemäß eingesetzten aprotischen Solventien führen auch bei höheren Konzentrationen nicht zu einem Abbau der zugrunde liegenden Polyamid-Formmassen, so dass die mechanischen Eigenschaften voll erhalten bleiben.

Wenn die Formmassen eine aprotische Verbindung gemäß Formel I enthält, bilden sich beim thermoplastischen Verarbeiten an kalten Stellen von Werkzeug- bzw. Formteiloberflächen höchstens niederviskose, farblose Tröpfchen oder Flüssigfilme, die wegfließen oder wegtropfen oder auch leicht abgewischt werden können, aber keine anhaftenden Beläge.

In einer bevorzugten Ausführungsform enthält die Formmasse zusätzlich Harnstoffderivate, deren Alkylreste am Stickstoff linear oder verzweigt sind und gegebenenfalls auch Heteroatome und Heterogruppen enthalten können oder eine Verknüpfung der beiden Stickstoffatome bilden, wobei die Harnstoffderivate der Formel II entsprechen,

R'/R2- N - CO - N -R2/R' II

wobei R2 und R' unterschiedlich oder identisch, linear oder verzweigt sein können und 1 bis 8 C-Atome besitzen oder je 2 R' eine Ethylen- oder Propylenbrücke sein kann, die die beiden N-Atome verknüpft. Besonders bevorzugt ist die Verbindung, bei der R2 und R' Butyl-Reste sind. Weiterhin sind der cyclische N,N-Dimethylethylen- und -propylen-Harnstoff sowie Tetrabutylharnstoff und Mischungen solcher Harnstoffderivate besonders geeignet. In einer besonders bevorzugten Ausführungsform werden die Harnstoffderivate als Mischungen mit den cyclischen N-Alkylcarbonamiden verwendet.

In einer weiteren bevorzugten Ausführungsform ist das Copolymer im wesentlichen Polyamid 12, insbesondere Polyamid 12-Blockcopolymer, das besonders bevorzugt hydrolytisch hergestellt ist. Alternativ kann das Copolymer bzw. das (Co)Polyamid eine Polyamidmischung sein, die z. B. eine Polyamidlegierung oder ein mehrphasiger Blend ist, das gegebenenfalls Phasenvermittler und/oder Schlagzähmodifikatoren mitenthält. So kann es beispielsweise eine 2-phasige Polyamid- Mischung sein, die aus Polyamid 12, einem semiaromatischen Polyamid und gegebenenfalls einem Verträglichkeitsvermittler besteht.

In einer alternativen Ausführungsform ist die Formmasse eine Polyamidmischung aus mindestens 20 Gew.-% Polyamid 12 und einem semikristallinen (Co)Polyamid und/oder amorphen (Co)Polyamid. Besonders bevorzugt ist als (Co)Polyamid eine PA-Mischung aus Polyamid 12 und einem amorphen Copolyamid.

Als zusätzliche Polyamide (PA) für die erfindungsgemäßen Polyamidmischungen werden vorteilhafterweise Polyamide basierend auf C₆-C₁₂-Lactamen oder ω-Aminocarbonsäuren mit 4 bis 18 Kohlenstoffatomen, bevorzugt 6 bis 12 Kohlenstoffatomen, oder Polykondensate verwendet, erhältlich aus der Polykondensation von mindestens einem Diamin aus der Gruppe der aliphatischen Diamine mit 4 bis 18 C-Atomen, der cycloaliphatischen Diamine mit 7 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen. Die ω-Aminocarbonsäuren oder die Lactame sind ausgewählt aus der Gruppe aus ε-Aminocapronsäure, 11-Aminoundecansäure, 12-Aminododecansäure, ε-Caprolactam, Enantholactam, Laurinlactam. Weiterhin ist es erfindungsgemäß möglich, Mischungen solcher Polymerisate bzw. Polykondensate einzusetzen. Erfindungsgemäß geeignete Diamine, die mit einer Dicarbonsäure kombiniert werden, sind beispielsweise 2,2,4- oder 2,4,4-Trimethylhexamethylendiamin, 1,3- oder 1,4-Bis(aminomethyl)cyclohexan, Bis(p-aminocyclohexyl)methan, m- oder p-Xylylendiamin, 1,4-Diaminobutan, 1,5-Diamino-2-methylpentan, 1,6-Diaminohexan, 1,8-Diaminooctan, 1,9-Diaminononan, 2-Methyl-1,8-diaminooctan, 1,10-Diaminodecan, 1,12-Diaminododecan, Cyclohexyldimethylendiamin, und die Dicarbonsäuren ausgewählt sind aus der Gruppe der Bernsteinsäure, Glutarsäure, Adipinsäure, Suberinsäure, Pimelinsäure, Korksäure, Azelainsäure, Sebazinsäure, Dodecandicarbonsäure, Oktadecandicarbonsäure, 4-Cyclohexandicarbonsäure, Terephthalsäure, Isophthalsäure und den Naphthalindicarbonsäuren.

Konkrete Beispiele für die zusätzlich in die Mischungen bzw. Legierungen einzubringenden (Co)Polyamide für die erfindungsgemäßen Formmassen sind daher Homo- oder Copolyamide aus der Gruppe aus PA 6, PA 66, PA 11, PA 46, PA 12, PA 1212, PA 1012, PA 610, PA 612, PA 69, PA 10T, PA 12T, PA 12I, deren Gemische oder Copolymere auf Basis der verwendeten Monomeren. Bevorzugt sind erfindungsgemäß auch Copolyamide PA 12T/12, PA 10T/12, PA 12T/106 und PA 10T/106. Weiterhin sind z. B. PA 6/66, PA 6/612, PA 6/66/610, PA 6/66/12, PA 6T/66, PA 6/6T, PA 6/6I, PA 6I/6T oder deren Gemische oder Gemische wie PA 12/MACMI, PA 66/6I/6T, MXD 6/6 ebenfalls bevorzugte Formmassen.

Die erfindungsgemäßen Polyamid-Formmassen können aber auch Polyamid 12 Blockcopolymere enthalten, die Polyester-, Polyether-, Polysiloxan-, Polycarbonat-, Polyacrylat-, Polymethacrylat- oder Polyolefinsegmente als weitere Bausteine neben einem Anteil von mindestens 20 % Polyamid 12-Bausteinen enthalten. Als Vertreter dieser Polymerklasse seien Polyetheramide, Polyetheresteramide und Polyesteramide genannt.

Natürlich können die erfindungsgemäßen thermoplastische Polyamid-Formmassen weiterhin übliche und dem Fachmann allgemein bekannte Zusatzstoffe alleine oder in Kombination enthalten, die ausgewählt sind aus der Gruppe, bestehend aus Schlagzähmittel, Fremdpolymer, Haftvermittler, Antiflammmittel, Verstärkungsmittel wie Glas- und C-Fasern, UV- oder Wärmestabilisatoren, Stabilisatoren gegen Bewitterung, Mineralien, Verarbeitungshilfsmittel, Kristallisations-Beschleuniger oder -Verzögerer, Oxidationsschutzmittel, Fließhilfsmittel, Gleitmittel, Entformungsmittel, Flammschutzmittel, Pigmente, Farb- und Markierungsstoffe und Füllstoffe wie Russ oder Graphit oder auch Nanoteilchen in Plättchenform, entsprechend allen bei Polyamiden bekannten Zusatzstoffen, wie sie für die jeweilige Anwendung notwendig sind.

Den zuvor beschriebenen (Co)Polyamiden oder Gemischen davon können für bestimmte Zwecke auch andere übliche Polymere wie Polyester, Polyolefine, Polycarbonate, AN- und ABS-Polymerisate, funktionalisierte Copolyolefine und Ionomere zugesetzt sein.

Als weitere Zusatzstoffe sind den erfindungsgemäßen thermoplastischen Polyamid-Formassen Schlagzähmodifikatoren zugesetzt. Diese sind z. B. Copolymere auf Polyolefinbasis von tiefer Glasumwandlungstemperatur, die Acrylsäure enthalten oder mit Maleinsäureanhydrid gepfropft sein können. Insbesondere seien hier Schlagzähmodifikatoren wie Ethylen-Propylen-Copolyolefine oder Ethylen-Propylen-Dien-Kautschuke (EPDM) oder Acrylatkautschuke genannt.

In bevorzugten Ausführungsformen enthalten die Formmassen weiterhin nanoskalige Füllstoffe. In einer besonderen Ausführungsform der Erfindung sind die nanoskaligen Füllstoffe entweder Siliziumdioxid oder Siliziumdioxid-Hydrate. In der Polyamid-Formmasse liegen gewisse nanoskaligen Füllstoffe in einer Ausführungsform als ein gleichmäßig dispergiertes, schichtförmiges Material vor. Vor dem Einarbeiten in die Matrix besitzen sie eine Schichtdicke von 0,7 bis 1,2 nm und einen Zwischenschichtabstand der Mineralschichten von bis zu 5 nm.

Aprotische Verbindungen gemäß Anspruch 1 mit einer polaren, funktionellen Gruppe und einem apolaren Alkylrest können die Einarbeitung solcher Füllstoffe wesentlich erleichtern. Werden sie Schichtsilikaten zugefügt, so kann ihre polare Gruppe als Koordinationsstelle für das Kation dienen und so mitbewirken, dass sich der Schichtabstand erhöht und so die Auftrennung der Primärpartikel und ihre Verteilung in der Matrix wesentlich verbessert und beschleunigt wird.

Solche Mineralien können in jeder beliebigen Stufe der Polymerherstellung zugegeben und dabei im Nanometerbereich fein verteilt werden. Bevorzugt sind Mineralien, die bereits eine Schichtstruktur aufweisen, wie Schichtsilikate, Doppelhydroxide, wie Hydrotalcit oder auch Graphit. Ebenso eignen sich Nanofüllstoffe auf Basis von Silikonen, Silica oder Silsesquioxanen.

Unter Schichtsilikaten im erfindungsgemässen Sinne werden 1:1 sowie 2:1 Schichtsilikate verstanden. In diesen Systemen sind Schichten aus SiO₄-Tetraedern mit solchen aus M(O,OH)₆-Oktaedern in regelmässiger Weise miteinander verknüpft. M steht dabei für Metallionen wie Al, Mg, Fe. Bei den 1:1-Schichtsilikaten sind dabei jeweils eine Tetraeder- und eine Oktaederschicht miteinander verbunden. Beispiele hierfür sind Kaolin- und Serpentin-Minerale.

In einer Ausführungsform der Erfindung gibt man zur Herstellung der erfindungsgemäßen thermoplastischen Polyamid-Formmassen die aprotische Verbindung auf Granulat aus (Co)Polyamid mit mindestens 20 % Polyamid 12-Anteil auf und mischt dieses, bis die Verbindung ins Granulat eindiffundiert ist. Das Mischen wird bevorzugt bei erhöhter Temperatur, bevorzugter bei 50 - 160 °C, insbesondere bei 60 - 120°C, durchgeführt. Die aprotische Verbindung kann beispielsweise als Flüssigfilm auf das Granulat aufgetragen werden, wonach man gegebenenfalls weitere pulverförmige Additive zufügt, und sodann die Einextrusion nach üblichen, bekannten Verfahren erfolgt.

Wird die aprotische Verbindung in höherem Mengenanteil verwendet, um z.B. als Weichmacher für das Polyamid zu dienen, so kann sie auch kontinuierlich mittels einer Pumpe direkt in die Schmelze dosiert werden.

Zudem ist es möglich, die aprotische Verbindung direkt vor der Polymerisation/Polykondensation der Monomere bzw. des Monomergemisches der Polyamid - Matrix oder während der Polymerisation/Polykondensation der Polyamid-Reaktionsmischung zuzugeben. Bei der Herstellung von Polyamid 12 kann beispielsweise die aprotische Verbindung zu 12-Aminolaurinsäure oder Lactam 12 zugegeben werden, und die erhaltene Mischung wird dann, gegebenenfalls unter Zusatz mindestens eines Kettenlängenreglers, polymerisiert. Das so erhaltene Granulat kann dann im Spritzguss- oder Extrusionsverfahren thermoplastisch umgeformt werden.

Liegt bereits ein auf die Anwendung bezogenes Granulat auf (Co)Polyamidbasis vor, bei dessen Verarbeitung Probleme wegen Ablagerungen auftreten, so kann die aprotische Verbindung einfach in anwendungsgeeigneter Menge zunächst als Flüssigfilm auf die Granulatoberfläche aufgebracht werden, wonach bei Notwendigkeit eine thermische Nachbehandlung erfolgen kann und dabei die aprotische Verbindung ins Granulat eindiffundiert, wodurch dieses seine gute Rieselfähigkeit zurückgewinnt, oder es können nachfolgend geeignete Feststoffadditive aufgebracht werden.

In einer bevorzugten Ausführungsform der Erfindung arbeitet man die aprotische Verbindung kontinuierlich während einem Extrusionsdurchgang, bevorzugt unter Verwendung eines 2-Wellenextruders, einer sog. ZSK, insbesondere auch gleichzeitig mit den weiteren Rezepturbestandteilen in die Polyamid-Matrix aus (Co)Polyamid mit mindestens 20 % Polyamid 12-Anteil ein. Man kann die aprotische Verbindung auch in höherer Konzentration einarbeiten und das so hergestellte Granulat als Masterbatch verwenden.

Die erfindungsgemäßen Polyamid-Formmassen werden zur thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen verwendet, wobei sich die thermoplastischen Polyamid-Formmassen gemäß der vorliegenden Erfindung insbesondere dadurch auszeichnen, dass bei der thermoplastischen Umformung keine Feststoffablagerungen entstehen.

Die folgenden Beispiele und Figuren sollen die Erfindung erläutern, ohne sie jedoch einzuschränken.

Figur 1 zeigt, dass bei der Flachfolienextrusion von einem Polyamid-12 Typ A ohne belagsreduzierende Zusätze ein weißer Feststoffbelag auf der Walze kurz nach der Extrusion (1 Min.) feststellbar war (vgl. Beispiel 33).

Figur 2 zeigt die Bildung von weißen Feststoffbelägen nach 5-minütiger Extrusion (vgl. Beispiel 33).

Figur 3 zeigt die Bildung von weißen Feststoffablagerungen nach 10-minütiger Extrusion (vgl. Beispiel 33).

Figur 4 zeigt die Extrusion eines Polyamid-12 Typ A mit Zusatz von 0,5 Gew.-% NOP (N-Octylpyrrolidon) gemäß der vorliegenden Erfindung nach einer Minute Extrusion (vgl. Beispiel 32).

Figur 5 zeigt den Einsatz von 0,5 Gew.-% NOP nach 5-minütiger Extrusion gemäß der Erfindung (vgl. Beispiel 32).

Figur 6 zeigt den Zusatz von 0,5 Gew.-% NOP nach 10-minütiger Extrusion gemäß der vorliegenden Erfindung (siehe Beispiel 32).

### Beispiele

Die Erfindung soll nun anhand von Beispielen beschrieben werden.

In den Beispielen bedeuten:

| Abkürzung | Bezeichnung |
|---|---|
| S | Aprotisches Solvatationsmittel |
| NOP | n-Octylpyrrolidon |
| TBH | Tetrabutylharnstoff |
| NOC | n-Octylcaprolactam |
| LC12 | Laurinlactam |
| ALS | Aminolaurinsäure |
| SS | Sebacinsäure |
| PA12 | Polyamid 12 |
| Grilamid L20 natur Grilamid L20 natur | mittelviskoses PA12; Basisgranulat, Spritzgussqualität der Fa. EMS-Chemie AG, CH-Domat/Ems |
| Grilamid L20G natur | mittelviskoses PA12 mit Gleitmittel der Fa. EMS-Chemie AG, CH-Domat/Ems |
| Polyamid Typ A | handelsübliches, mittelviskoses PA12; hydrolyse-, hitze-, UV-beständig, der Fa. EMS-Chemie AG, CH-Domat/Ems |
| MVR (Melt Volume Index) Schmelze-Volumenfliess-Rate | |
| VB | Vergleichsbeispiel |
| ηᵣₑₗ | relative Lösungsviskosität des Polylactams, gemessen als 0,5 %ige Lösung in m-Kresol nach EN ISO 3105 |

### Beispiele 1-3. Löslichkeit von LC12 im Solvatationsmittel.

In einem beheizten Glasrohr wurden jeweils 5 g LC12 zusammen mit NOP, TBH und NOC in verschiedenen Gewichtsanteilen bei 180 °C unter Inertgas aufgeschmolzen und durch Schütteln gemischt. Es wurde der Gewichsanteil Solvatationsmittel bestimmt, bei dem nach Abkühlen des Gemisches auf Raumtemperatur die gesamte Menge LC12 in Lösung blieb (Tabelle 1). In NOP und NOC konnten je 15, in TBH 8 Gew.-% LC12 gelöst werden.

### Beispiele 4-6. Diffusion der Solvatationsmittel in die PA12-Matrix.

Untersucht wurde, welche Menge an Solvatationsmittel in PA12 eindiffundiert. Dazu wurden in einem Erlenmeyerkolben jeweils 30 g Grilamid L20 natur eingewogen und auf 120°C erhitzt. Anschliessend gab man schrittweise 2 Gew.-% des jeweiligen Solvatationsmittels unter permanentem Schütteln zu. Die Diffusion in das Granulat beobachtete man anhand der Rieselfähigkeit der Granulatkörner. Dieser Vorgang wurde wiederholt, bis kein Solvatationsmittel mehr aufgenommen wurde. In Beispiel 5 konnten maximal 4 Gew.-% TBH vom Granulat aufgenommen werden, in den Beispielen 4 und 6 konnten 10 Gew.-% NOP bzw. NOC absorbiert werden, wobei die maximale Aufnahmekapazität noch nicht erreicht war (Tabelle 2).

### Beispiele 7-10: Sublimationsverhalten von LC12 aus hydrolytischem PA12 bei Mitverwendung der erfindungsgemässen Solvatationsmittel

In einem beheizten Glasrohr wurde unter Inertgas hydrolytisches PA12 durch Kondensation von ALS hergestellt, wobei die Molmasse mit SS auf 10000 g/mol eingestellt wurde (Tabelle 3). Zusätzlich wurden 0,15 Gew.-% LC12 und jeweils 0,6 Gew.-% NOP, TBH und NOC hinzugefügt, um das Sublimationsverhalten von LC12 aus den erfindungsgemässen Formulierungen beobachten zu können. Die Edukte wurden bei 200 °C für 1 h aufgeschmolzen und anschliessend für 4 h auf 250 °C erhitzt. Dabei wurde das entstehende Wasser durch einen permanenten Inertgasstrom aus dem Glasrohr entfernt. Nach dem Ende der Reaktion erhitzte man für 1 h auf 280 °C, setzte eine Sublime auf das Glasrohr und beobachtete das Sublimat bzw. Kondensat. Ohne Zusatz von S sublimierte reines LC12 (Beispiel 7), mit Zusatz von S kondensierte eine Mischung aus LC12 und S, welche flüssig blieb. In Beispiel 10 reichte die Menge TBH nicht aus, um das LC12-Sublimat vollständig zu verflüssigen.

### Beispiele 11-15: Folienherstellung auf einer gekühlten Walze

Auf einem Zweischneckenextruder ZK 25 T der Firma Collin, Ebersberg, wurde Grilamid L20 natur aufgeschmolzen und als Folie abgezogen, wobei die Belagsbildung von LC12 beobachtet wurde. Der Durchmesser der beiden gleichläufigen Schnecken betrug 25 mm und das Längen/Durchmesserverhältnis L/D=8/1. Das Granulat wurde über einen gravimetrischen Dosierer K-Tron K-SFS-24 mit Schneckenförderung dosiert und durch fünf Heizzonen mit 100, 230, 240, 240 und 240 °C aufgeschmolzen. Die Schmelze wurde durch eine horizontale Breitschlitzdüse (120 mm) ausgetragen. Die Drehzahl betrug 150 U/min bei einem Durchsatz von 3 kg/h. Die Folie wurde von einer Flachfolienanlage Collin Chill Roll Typ CR 72 T abgezogen, geglättet und aufgewickelt. Die ersten zwei Walzen waren temperiert (20°C) und geschlossen. Anschließend lief die Folie über eine Kühlwalze und wurde aufgewickelt. Ohne Zusatz des Solvatationsmittels NOP bildeten sich innerhalb weniger Minuten feste Ablagerungen auf der oberen temperierten Walze, die sich von Zeit zu Zeit von der Walze lösten und auf der Folien hängen blieben. In Folgeversuchen wurden dem Polymer je 0,1, 0,25 und 0.5 Gew.-% NOP zugesetzt (Beispiele 12-14; Tabelle 4). Mit höherem NOP-Anteil nahmen die Ablagerungen ab, bis man bei 0,5 Gew.-% NOP (Beispiel 14) einen Film ohne LC12-Belag extrudieren konnte. Diese Menge reichte beim TBH (Beispiel 15a) nicht aus, um die Belagsbildung vollständig zu unterdrücken.

### Beispiele 16-19: Spritzguss von PA12 mit belagsreduzierenden Zusätzen

Auf einer Spritzgussanlage Krauss Maffei KM 50-55C wurden Untersuchungen zur Belagsbildung durch LC12 bzw. Additiven durchgeführt. Als Werkzeug wurde ein Modul für Bindenahtzugstäbe verwendet, welches einen nitrierten Entlüftungseinsatz mit 0,01 mm Entlüftungstiefe aufwies. Um den Mindestgehalt an Solvatationsmittel zu bestimmen, bei dem keine festen Ablagerungen aus LC12 im Spritzgusswerkzeug entstehen, wurden dem Grilamid L20G natur je 0,061, 0,125, 0,250, und 0,500 Gew.-% der Solvatationsmittel NOP, TBH bzw. NOC zugesetzt und mit einer Einspritzgeschwindigkeit von 100 mm/s und einer gestochenen Massetemperatur von 290°C zu Zugstäben hergestellt (Tabelle 5). An der Entlüftungsöffnung des Werkzeuges konnte man bei zu geringem Anteil S einen Belag bzw. eine hochviskose Ablagerung erkennen, bei ausreichendem Anteil bildete sich dagegen kein Belag, sondern ein dünner, niedrigviskoser, farbloser Flüssigkeitsfilm, der den Spritzgussvorgang in keiner Weise beeinträchtigte. Ab einem Gehalt von mindestens 0,125, 0,500 bzw. 0,250 Gew.-% bildete sich mit je NOP, TBH bzw. NOC keine festen LC12-Ablagerungen. Ohne Verwendung eines erfindungsgemäßen aprotischen Solvens wird in jedem die Bildung eines festen Belages beobachtet.

### Beispiele 20-29: Einfluss der Solvatationsmittel auf den Abbau und die mechanischen Eigenschaften von PA12.

Auf einem Zweischneckenextruder wurden analog den Beispielen 11-15 die Solvatationsmittel NOP, TBH und NOC zu jeweils 0,25, 0,50 und 1,00 Gew.-% in PA12 (Grilamid L20G natur) eingearbeitet und zu Granulat verarbeitet. Es wurde über vier Zonen mit 100, 230, 240 und 240 °C compoundiert und durch einen Schrägspritzkopf mit Düsendurchmesser von 3 mm extrudiert, im Wasserbad gekühlt und mit einem Stranggranulator Collin CSG 171 T zerkleinert. Das Granulat wurde auf einer Spritzgussmaschine Arburg Allrounder 320-210-750 bei 258 °C Massetemperatur, 40 °C Werkzeugtemperatur, einem Einspritzdruck von 45 bar und einer Zykluszeit von 30 s zu Zugstäben verspritzt und mit diesen Untersuchungen bezüglich des Einflusses der S auf Abbaureaktionen des Polymers und seine mechanischen Eigenschaften durchgeführt (Tabelle 6).

Keines der S bewirkte bis zu einer Konzentration von 1 % einen verstärkten Abbau in der Schmelze. ηᵣₑₗ und MVR nach 4 bzw. 20 min. zeigten keinen Unterschied verglichen mit dem Standardmaterial Grilamid L20 G natur (Beispiel 29). Auch die mechanischen Eigenschaften wurden nicht beeinflusst, einzig die Bruchdehnung zeigte um 19-65 % höhere Werte. Dadurch wurde auch die Bruchfestigkeit erhöht.

### Beispiele 30-31: Wellrohrextrusion von PA12 mit NOP

Zur Untersuchung der Auswirkung des Solvatationsmittels auf die Produktion von Wellrohren wurde ein Compound mit 0,5 Gew.-% NOP in Polyamid-12 Typ A hergestellt und im Dauerversuch mit dem reinen Polyamid-12 Typ A verglichen (Tabelle 7). Das Material wurde bei 250 °C extrudiert (Müller & Sohn AG, Rorbas) und mit einer Abzugsgeschwindigkeit von ca. 2 m/min. und einer Formbackentemperatur von 50 °C zu Wellrohr (Uniwell Corrugator) verarbeitet. Mit dem erfindungsgemässen Compound zeigten sich nach 10 h nur sehr wenig Ablagerungen an den Vakuumschlitzen, während sich beim reinen PA12 ohne NOP bereits nach 1 Stunde LC12-Belag bildete, der die Vakuumschlitze nach 3 Stunden verstopfte. Die Werte für ηᵣₑₗ zeigten in Beispiel 30 keinen Abbau.

**Tabelle 1. Löslichkeit von LC12 in den erfindungsgemässen Solvatationsmitteln bzw. in TBH.**

| Beispiel | S | Löslichkeit LC 12 [Gew.-%] |
|---|---|---|
| 1 | NOP | 15 |
| 2 | TBH | 8 |
| 3 | NOC | 15 |

**Tabelle 2. Diffusion des aprotischen Solvens in die PA12-Matrix bei 130°C.**

| Beispiel | S | Anteil S [Gew.%] |
|---|---|---|
| 4 | NOP | >10 |
| 5 | TBH | 4 |
| 6 | NOC | >10 |

**Tabelle 3. Sublimationsverhalten von LC12 aus hydrolytischem PA12.**

| Beispiel | ALS [g] | SS [g] | LC12 [g] | NOP [g] | NOC [g] | TBH [g] | Sublimat/Kondensat |
|---|---|---|---|---|---|---|---|
| VB 7 | 32,7 | 0,61 | 0,15 | - | - | - | fest |
| 8 | 32,7 | 0,61 | 0,15 | 0,6 | - | - | flüssig |
| 9 | 32,7 | 0,61 | 0,15 | - | 0,6 | - | flüssig |
| VB 10 | 32,7 | 0,61 | 0,15 | - | - | 0,6 | fest/flüssig |

**Tabelle 4. Belagsbildung bei der Folienextrusion mit variierten Anteilen Solvatationsmittel S in Grilamid L20.**

| Beispiel | Anteil S [Gew.-%] | S | LC12-Belag auf der Walze |
|---|---|---|---|
| VB 11 | - | - | sehr starker Belag |
| 12 | 0,10 | NOP | starker Belag |
| 13 | 0,25 | NOP | leichter Belag |
| 14 | 0,50 | NOP | dünner, farbloser NOP-Film |
| VB 15a | 0,50 | TBH | leichter Belag |
| VB 15b | 0,70 | TBH | dünner, farbloser Film, keine Feststoffablagerung |

**Tabelle 5. Beschaffenheit der sich beim Spritzguss bildenden Ablagerungen mit variierten Anteilen Solvatationsmittel S in Grilamid L20 G.**

| Beispiel | Anteil S [Gew.-%] | NOP | TBH | NOC |
|---|---|---|---|---|
| 16 | 0,061 | hochviskos | fest | fest |
| 17 | 0,125 | niedrigviskos | fest | hochviskos |
| 18 | 0,250 | niedrigviskos | hochviskos | niedrigviskos |
| 19 | 0,500 | niedrigviskos | niedrigviskos | niedrigviskos |

**Tabelle 6. Mechanische Eigenschaften von Grilamid L20 G mit variierten Anteilen Solvatationsmittel S.**

| | | | | | | | | | | | |
|---|---|---|---|---|---|---|---|---|---|---|---|
| Beispiel | | 20 | 21 | 22 | VB 23 | VB 24 | VB 25 | 26 | 27 | 28 | VB 29 |
| S | | NOP | NOP | NOP | TBH | TBH | TBH | NOC | NOC | NOC | - |
| Anteil S | Gew.-% | 0,25 | 0,50 | 1,00 | 0,25 | 0,50 | 1,00 | 0,25 | 0,50 | 1,00 | - |
| H₂O-Gehalt | Gew.-% | 0,019 | 0,089 | 0,039 | 0,060 | 0,081 | 0,103 | 0,044 | 0,072 | 0,064 | 0,081 |
| MVR (275°C, 5 kg, 4 min) (ISO1133) (a) | cm³/10min. | 100 | 127 | 122 | 122 | 137 | 132 | 100 | 118 | 130 | 119 |
| MVR (275°C, 5 kg, 20 min) (ISO1133) (b) | cm³/10min, | 167 | 188 | 147 | 158 | 184 | 206 | 146 | 174 | 183 | 173 |
| ηᵣₑₗ (Basisgranulat) | - | 1,865 | 1,825 | 1,828 | 1,824 | 1,835 | 1,820 | 1,831 | 1,821 | 1,835 | 1,835 |
| ηᵣₑₗ (Schmelzekegel aus MVR-Messung (a)) | - | 1,901 | 1,794 | 1,792 | 1,804 | 1,748 | 1,791 | 1,809 | 1,804 | 1,800 | 1,817 |
| ηᵣₑₗ (Schmelzekegel aus MVR-Messung (b)) | - | 1,743 | 1,725 | 1,765 | 1,738 | 1,748 | 1,720 | 1,770 | 1,740 | 1,748 | 1,753 |
| Zugmodul | MPa | 1405 | 1400 | 1375 | 1295 | 1320 | 1325 | 1220 | 1250 | 1255 | 1400 |
| Streckspannung | MPa | 45 | 45 | 44 | 43 | 43 | 43 | 41 | 42 | 42 | 45 |
| Streckdehnung | % | 5,0 | 4,8 | 5,0 | 5,3 | 5,2 | 5,1 | 5,8 | 5,7 | 5,4 | 5,1 |
| Bruchfestigkeit | MPa | 57 | 47 | 47 | 56 | 47 | 60 | 60 | 61 | 32 | 38 |
| Bruchdehnung | % | 315 | 260 | 255 | 316 | 260 | 335 | 330 | 355 | 140 | 215 |
| Schlag Charpy new (23°C) (ISO179/1eU) | kJ/m² | >100 | >100 | >100 | >100 | >100 | >100 | >100 | >100 | >100 | >100 |
| Schlag Charpy new (-30°C) (ISO179/1eU) | kJ/m² | >100 | >100 | >100 | >100 | >100 | >100 | >100 | >100 | >100 | >100 |
| Kerbschlag Charpy new (23°C) (ISO179/1eA) | kJ/m² | 6,1 | 6,1 | 5,9 | 5,9 | 5,9 | 5,9 | 5,9 | 5,9 | 6,2 | 6,0 |
| Kerbschlag Charpy new (-30°C) (ISO179/1eA) | kJ/m² | 6,2 | 6,0 | 5,8 | 6,5 | 6,0 | 6,1 | 6,3 | 5,9 | 6,4 | 6,2 |

**Tabelle 7. Abbau- und Verarbeitungsverhalten (Wellrohrherstellung.) von PA 12 mit NOP als Additiv zur Belagsreduktion**

| | | | |
|---|---|---|---|
| Beispiel | | 30 | VB 31 |
| Basismaterial | | Polyamid Typ A | Polyamid Typ A |
| S | | NOP | - |
| Anteil S | Gew.-% | 0,50 | - |
| H₂O-Gehalt | Gew.-% | 0,038 | 0,072 |
| LC12-Gehalt | Gew.-% | 0,21 | 0,21 |
| MVR (275°C, 5 kg, 4 min) | cm³/10min. | 21,0 | 10,5 |
| MVR (275°C, 5 kg, 20 min) | cm³/10min. | 23,0 | 12,3 |
| ηᵣₑₗ (Basisgranulat) | - | 2,31 | 2,35 |
| ηᵣₑₗ (Schmelzekegel 4') | - | 2,31 | 2,48 |
| ηᵣₑₗ (Schmelzekegel 20') | - | 2,29 | 2,52 |
| **Dauerversuch Wellrohrherstellung** | | | |
| Ablagerungen | | nach 10h nur geringfügige Ablagerungen | bereits nach 1h deutliche Ablagerungen |
| Verstopfen der Vakuumschlitze | | >>10h | |

### Beispiel 32 und Vergleichsbeispiel 33: Flachfolienextrusion von Polyamid 12 mit belagsreduzierenden Zusätzen.

Hinsichtlich der Feststoffablagerungsproblematik bei der Extrusion wurde ein Polyamid 12 Typ A mit (Beispiel 32) und ohne (Beispiel 33) Zusatz von NOP in der Flachfolienextrusion untersucht. Das erfindungsgemäße Compound enthielt 0,5% NOP (N-Octyl-pyrrolidon).

In einer weiteren Versuchsvariante wurden die beiden Polyamide vorgängig zur Extrusion einer Hitzelagerung (110°C/48h) unterzogen. An den hergestellten Folien wurde die Folienqualität geprüft. Zusätzlich wurde das Verhalten von Polyamid 12 mit und ohne NOP-Zusatz bei längeren Standzeiten im Extruder untersucht.

Die Flachfolienextrusion wurde auf einer Laboranlage (Zweischneckenextruder ZK 25T mit Folienwerkzeug und Walzenabzug Chill Roll Typ CR 72 T der Firma Collin, Ebersberg) mit folgenden Parameter durchgeführt:

| | |
|---|---|
| Einstellungen für die Heizzonen | 100°C, 230°C, 240°C, 240°C, 250°C |
| Schmelzetemperatur | 253°C |
| Drehzahl | 150 U/Min* |
| Dosierung | 3 kg/h** |
| Walzentemperatur | 20°C |

| | |
|---|---|
| *U/Min = Umdrehungen pro Minute **h = Stunde | |

### Resultate:

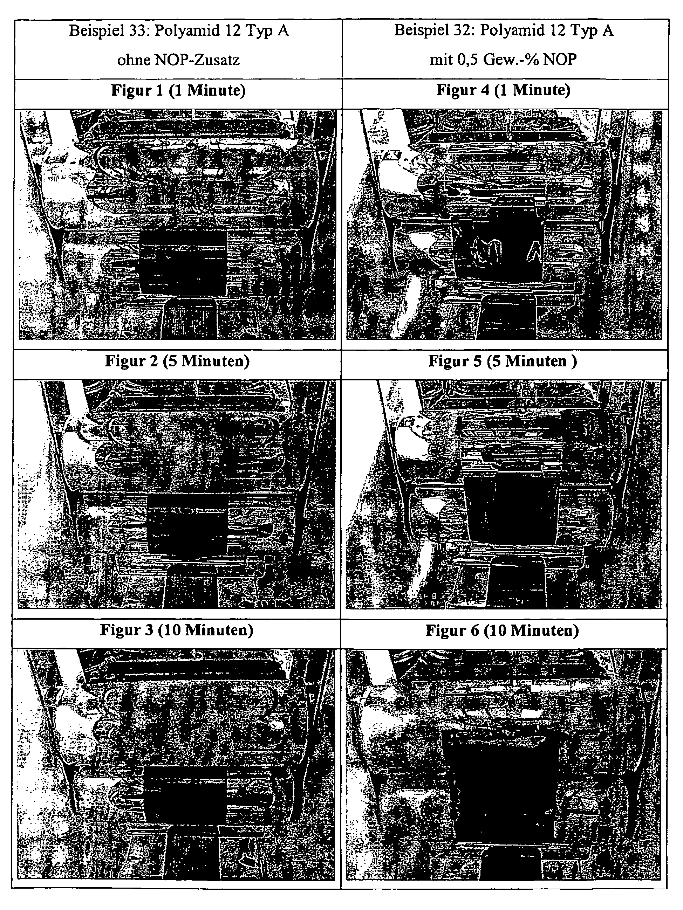

- Bei der Verarbeitung des NOP-haltigen Polyamid 12 wird auch nach längerer Extrusionsdauer keine Bildung eines Feststoffbelages auf der temperierten Walze (20°C) beobachtet. Es entstehen also erfindungsgemäß keine Feststoffablagerungen (siehe Figuren 4, 5, 6).
- Das unmodifizierte Polyamid 12 Typ A erzeugte aber bereits kurz nach Extrusionsstart einen deutlichen, weißen Belag auf der Walze, der mit zunehmender Versuchsdauer stärker wird (siehe Figuren 1 bis 3). Der Hauptbestandteil dieses Feststoffbelages ist Lactam 12.
- Das gleiche Verhalten wurde auch nach 48 stündigen Lagerung des Granulates bei 110°C festgestellt, d. h. der Compound mit NOP zeigte keine Ablagerungen, während das unmodifizierte Polyamid 12 Typ A wiederum nach kurzer Extrusiondauer einen deutlichen Belag erzeugte.
- Ein weiteres positives Ergebnis des NOP-Zusatzes ist, dass bei längerer Wärmeeinwirkung weder ein bedeutender Abbau oder Aufbau des Polyamid 12 beobachtet werden kann. Lässt man die Schmelze im Folienextruder für 5 bis 10 Minuten stehen (keine Förderung durch die Schnecke), so baut das unmodifizerte Polyamid 12 unkontrolliert auf und die Folie zeigt nach Wiederanfahren eine hohe Anzahl von Stippen. Diese Stippenbildung kann jedoch durch Zusatz von NOP vermieden werden. Das NOP-haltige Polyamid 12 zeigt nach einer Standzeit von 5 bis 10 Minuten keinerlei Stippen in der extrudierten Folie.

## Patentansprüche

1. Thermoplastische Polyamid-Formmassen, enthaltend mindestens 20 Gew.-% Polyamid 12, bezogen auf die Polyamidmatrix-Komponente, und/oder mindestens ein Copolymer mit mindestens 20 Gew.-% Polyamid 12-Bausteinen, bezogen auf die Polyamidmatrix-Komponente, und mindestens eine aprotische Verbindung in einem Anteil von 0,05 bis 3,0 Gew.-%, bezogen auf das Gesamtgewicht der Polyamidmatrix-Komponente, aus der Gruppe der N-alkylierten, cyclischen Carbonsäureamide mit 5 - 7 Ringgliedern, wobei das Carbonsäureamid der folgenden Formel I entspricht und x 1 bis 3 ist und R1 ein Octyl-Rest ist: 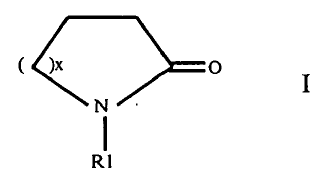 wobei der Octyl-Rest linear, verzweigt, oder cyclisch ist und gegebenenfalls Heteroatome und Heterogruppen enthält oder eine Verknüpfung der beiden N-Atome bildet.

2. Thermoplastische Polyamid-Formmassen gemäß Anspruch 1, **dadurch gekennzeichnet, dass** als aprotische Verbindung mindestens eine Verbindung eingesetzt wird, die ausgewählt ist aus der Gruppe, bestehend aus N-Octylpyrrolidon, N-Octylcaprolactam und deren Gemische.

3. Thermoplastische Polyamid-Formmassen gemäß Anspruch 1 oder 2, **dadurch gekennzeichnet, dass** das Polyamid 12 hydrolytisch herstellbares Polyamid 12 ist.

4. Thermoplastische Polyamid-Formmassen gemäß irgendeinem der Ansprüche 1 bis 3, **dadurch gekennzeichnet, dass** das Copolymer ein Polyamid 12-Blockcopolymer ist, welches Polyester-, Polyether-, Polysiloxan-, Polycarbonat-, Polyacrylat-, Polymethacrylat- oder Polyolefinsegmente als weitere Bausteine neben einem Anteil von mindestes 20 Gew.-% Polyamid 12-Bausteinen enthält.

5. Thermoplastische Polyamid-Formmassen gemäß irgendeinem der Ansprüche 1 bis 4, **dadurch gekennzeichnet, dass** das Copolymer eine 2-phasige Polyamid-Mischung, bestehend aus Polyamid 12 und einem semiaromatischen Polyamid, gegebenenfalls mitenthaltend einen Verträglichkeitsvermittler, ist.

6. Thermoplastische Polyamid-Formmassen gemäß Anspruch 1 oder 2, **dadurch gekennzeichnet, dass** das Copolymer eine Polyamidmischung aus Polyamid 12 mit mindestens einem (Co)Polyamid ist, das ausgewählt ist aus der Gruppe, bestehend aus PA 6, PA 66, PA 11, PA 46, PA 1212, PA 1012, PA 610, PA 612, PA 69, PA 10T, PA 12T, PA 12I, deren Gemische oder Copolyamide auf Basis der verwendeten Polyamidmonomeren und/oder Polyamid 12, sowie PA 6T/66, PA 6/6T, PA 6/6I, PA 6I/6T oder deren Gemische oder Gemische wie PA 12/MACMI, PA 66/6I/6T, MXD 6/6, wobei auch dimerisierte Fettsäuren mit 36 und 44 C-Atomen als Monomere verwendet werden können.

7. Thermoplastische Polyamid-Formmassen gemäß Anspruch 6, **dadurch gekennzeichnet, dass** die Polyamidmischung als ein- oder mehrphasige Mischung vorliegt, die gegebenenfalls Phasenvermittler und/oder Schlagzähmodifikatoren enthält.

8. Thermoplastische Polyamid-Formmassen gemäß Anspruch 7, **dadurch gekennzeichnet, dass** das (Co)Polyamid eine Polyamid-Mischung aus Polyamid 12 und einem amorphen Copolyamid oder semiaromatischen Polyamid ist.

9. Thermoplastische Polyamid-Formmassen gemäß irgendeinem der Ansprüche 1 bis 8, **dadurch gekennzeichnet, dass** sie übliche Zusatzstoffe alleine oder in Kombination enthält, die ausgewählt sind aus der Gruppe, bestehend aus Schlagzähmittel, Fremdpolymer, Haftvermittler, Antiflammmittel, Verstärkungsmittel wie Glas- und C-Fasem, sowie Stabilisatoren gegen Abbau durch Licht, Hitze, Bewitterung, Mineralien und Verarbeitungshilfsmittel, Farbstoffe und Ruß.

10. Thermoplastische Polyamid-Formmassen gemäß irgendeinem der Ansprüche 1 bis 9, **dadurch gekennzeichnet, dass** sie zusätzlich Weichmacher, insbesondere aus der Gruppe der Benzol- oder Toluolsulfonsäureamid-Weichmacher, besonders bevorzugt N,N-Dibutylbenzolsulfonamid und/oder N,N-Dibutyltoluolsufonamid, enthalten, insbesondere in Mengen von 0,5 bis 15 Gew.-%, bezogen auf das Gesamtgewicht der Polyamidmatrix-Komponente.

11. Thermoplastische Polyamid-Formmassen gemäß irgendeinem der Ansprüche 1 bis 10, **dadurch gekennzeichnet, dass** sie nanoskalige Füllstoffe enthalten.

12. Verfahren zur Herstellung von Polyamid-Formmassen gemäß irgendeinem der Ansprüche 1 bis 11, **dadurch gekennzeichnet, dass** man die aprotische Verbindung auf Granulat aus (Co)Polyamid aufgibt und dieses, bevorzugt bei erhöhter Temperatur, solange mischt, bis die Verbindung ins Granulat eindiffundiert ist.

13. Verfahren gemäß Anspruch 11, **dadurch gekennzeichnet, dass** das Verfahren im Bereich von Raumtemperatur bis max. 160°C, insbesondere bei 60 bis 120°C, durchgeführt wird.

14. Verfahren zur Herstellung von Polyamid-Formmassen gemäß Anspruch 1 bis 11, **dadurch gekennzeichnet, dass** man die aprotische Verbindung in einem hohen Anteil von 3 bis 30 Gew.-% in die Polyamid-Matrix einarbeitet und man dieses Granulat so dann als Masterbatch verwendet.

15. Verfahren zur Herstellung von Polyamid-Formmassen gemäß irgendeinem der Ansprüche 1 bis 11 und 14, **dadurch gekennzeichnet, dass** man die aprotische Verbindung kontinuierlich während einem Extrusionsdurchgang, bevorzugt unter Verwendung eines 2-Wellenextruders, einer sog. ZSK, insbesondere auch gleichzeitig mit den weiteren Rezepturbestandteilen in die Polyamid-Matrix aus (Co)Polyamid mit mindestens 20 Gew.-% Polyamid 12-Bausteinen einarbeitet.

16. Verwendung der Polyamid-Formmassen gemäß Anspruch 1 bis 11 zur thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen, **dadurch gekennzeichnet, dass** bei der thermoplastischen Umformung keine Feststoffablagerungen entstehen.

## Claims

1. Thermoplastic polyamide moulding compositions, containing at least 20 % by wt. polyamide 12, relative to the polyamide matrix component, and/or at least one copolymer having at least 20 % by wt. polyamide 12 building blocks, relative to the polyamide matrix component, and at least one aprotic compound in a proportion of between 0.05 and 3.0 % by wt., relative to the total weight of the polyamide matrix component, from the group of N-alkylated, cyclic carboxylic acid amides having 5 - 7 ring members, wherein the carboxylic acid amide corresponds to the following Formula I, and x is 1 to 3, and R1 is an octyl residue: 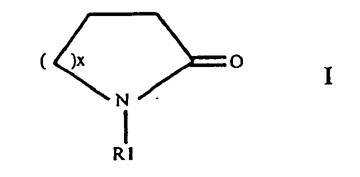 and wherein the octyl residue is linear, branched or cyclic and possibly contains heteroatoms and heterogroups or forms a link between the two N atoms.

2. Thermoplastic polyamide moulding compositions according to claim 1, **characterised in that** at least one compound is used as the aprotic compound, which is selected from the group comprising N-octyl pyrrolidone, N-octyl caprolactam and mixtures thereof.

3. Thermoplastic polyamide moulding compositions according to claim 1 or 2, **characterised in that** the polyamide 12 is hydrolytically reproducible polyamide 12.

4. Thermoplastic polyamide moulding compositions according to any of claims 1 to 3, **characterised in that** the copolymer is a polyamide 12 block copolymer, which contains polyester segments, polyether segments, polysiloxan segments, polycarbonate segments, polyacrylate segments, polymethacrylate segments or polyolefin segments as additional building blocks in addition to a proportion of at least 20 % by wt. polyamide 12 building blocks.

5. Thermoplastic polyamide moulding compositions according to any of claims 1 to 4, **characterised in that** the copolymer is a 2-phase polyamide mixture, comprising polyamide 12 and a semiaromatic polyamide, possibly also containing a compatibility agent.

6. Thermoplastic polyamide moulding compositions according to claim 1 or 2, **characterised in that** the copolymer is a polyamide mixture of polyamide 12 with at least one (co)polyamide, which is selected from the group comprising PA 6, PA 66, PA 11, PA 46, PA 1212, PA 1012, PA 610, PA 612, PA 69, PA 10T, PA 12T, PA 12I, mixtures thereof or copolyamides based on the polyamide monomers used, and/or polyamide 12, as well as PA 6T/66, PA 6/6T, PA6/6I, PA 6I/6T or mixtures thereof, or mixtures such as PA 12/MACMI, PA 66/6I/6T and MXD 6/6, dimerised fatty acids having 36 and 44 C atoms also being able to be used as the monomers.

7. Thermoplastic polyamide moulding compositions according to claim 6, **characterised in that** the polyamide mixture is present as a single- or multi-phase mixture, which possibly contains phase agents and/or impact-toughness modificators.

8. Thermoplastic polyamide moulding compositions according to claim 7, **characterised in that** the (co)polyamide is a polyamide mixture of polyamide 12 and an amorphous copolyamide or semi-aromatic polyamide.

9. Thermoplastic polyamide moulding compositions according to any of claims 1 to 8, **characterised in that** they contain conventional additional substances, alone or in combination, which are selected from the group comprising impact-toughness agents, foreign polymers, bonding agents, flameproofing agents, reinforcing agents such as glass fibres and C fibres, as well as stabilisers to prevent decomposition through light, heat, weather, minerals, and processing adjuvants, dyestuffs and carbon black.

10. Thermoplastic polyamide moulding compositions according to any of claims 1 to 9, **characterised in that** they additionally contain plasticisers, more especially from the group of benzene or toluene sulphonic acid amide plasticisers, particularly preferably N,N-dibutyl benzene sulphonamide and/or N,N-dibutyl toluene sulphonamide, more especially in quantities of between 0.5 and 15 % by wt., relative to the total weight of the polyamide matrix component.

11. Thermoplastic polyamide moulding compositions according to any of claims 1 to 10, **characterised in that** they contain nanoscale filler substances.

12. Method of producing polyamide moulding compositions according to any of claims 1 to 11, **characterised in that** the aprotic compound applies to the granulate of (co)polyamide and said granulate is mixed, preferably at a high temperature, until such time as the compound is diffused into the granulate.

13. Method according to claim 11, **characterised in that** the method is accomplished within the range of a max. ambient temperature up to 160° C, more especially between 60 and 120° C.

14. Method of producing polyamide moulding compositions according to claims 1 to 11, **characterised in that** the aprotic compound is incorporated into the polyamide matrix in a high proportion of between 3 and 30 % by wt., and this granulate is then used thus as the master batch.

15. Method of producing polyamide moulding compositions according to any of claims 1 to 11 and 14, **characterised in that** the aprotic compound is continuously incorporated into the polyamide matrix of (co)polyamide, having at least 20 % by wt. polyamide 12 building blocks, during one extrusion passage, preferably by using a 2-shaft extruder, a so-called ZSK, more especially even simultaneously with the additional recipe ingredients.

16. Use of the polyamide moulding compositions according to claims 1 to 11 for the thermoplastic reshaping process to form commodities in discontinuous processes, more especially in injection-moulding, and in continuous processes such as extrusion to form films, fibres, tubes and casings, **characterised in that** no solid deposits are produced during the thermoplastic reshaping process.

## Revendications

1. Masses moulées en polyamide thermoplastiques, contenant au moins 20% en poids de polyamide 12, par rapport au composant de la matrice polyamide, et/ou au moins un copolymère ayant au moins 20% en poids de motifs de polyamide 12, par rapport au composant de la matrice polyamide, et au moins un composé aprotique en une proportion de 0,05 à 3,0% en poids, par rapport au poids total du composant de la matrice polyamide, du groupe des amides d'acides carboxyliques cycliques N-acylés ayant de 5 à 7 membres dans le cycle, l'amide d'acide carboxylique correspondant à la formule 1 suivante et x étant de 1 à 3 et R₁ étant un radical octyle : 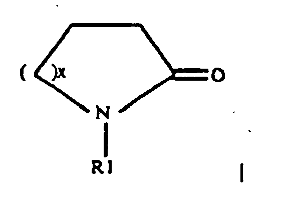 où le radical octyle est linéaire, ramifié ou cyclique et, le cas échéant, comprend des hétéroatomes et hétérogroupes ou forme une liaison des deux atomes de N.

2. Masses moulées en polyamide thermoplastiques selon la revendication 1, **caractérisées en ce que** l'on utilise comme composé aprotique au moins un composé qui est choisi dans le groupe constitué de la N-octylpyrrolidone, du N-octylcaprolactame et de leurs mélanges.

3. Masses moulées en polyamide thermoplastiques selon la revendication 1 ou 2, **caractérisées en ce que** le polyamide 12 est le polyamide 12 pouvant être fabriqué par hydrolyse.

4. Masses moulées en polyamide thermoplastiques selon l'une quelconque des revendications 1 à 3, **caractérisées en ce que** le copolymère est un copolymère à blocs de polyamide 12, qui contient comme autre motifs, hormis une proportion d'au moins 20% en poids de motifs polyamide 12, des segments de polyester, polyéther, polysiloxane, polycarbonate, polyacrylate, polyméthacrylate ou polyoléfine.

5. Masses moulées en polyamide thermoplastiques selon l'une quelconque des revendications 1 à 4, **caractérisées en ce que** le copolymère est un mélange de polyamide biphasique, constitué de polyamide 12 et d'un polyamide semi-aromatique, contenant le cas échéant conjointement un agent compatibilisant.

6. Masses moulées en polyamide thermoplastiques selon la revendication 1 ou 2, **caractérisées en ce que** le copolymère est un mélange de polyamide constitué de polyamide 12 avec au moins un (co)polyamide, choisi dans le groupe constitué de PA 6, PA 66, PA 11, PA 46, PA 1212, PA 1012, PA 610, PA 612, PA 69, PA 10T, PA 12T, PA 121, leurs mélanges ou copolyamides à base des monomères de polyamide utilisés et/ou du polyamide 12, ainsi que PA 6T/66, PA 6/6T, PA 6/6I, PA 61/6T ou leurs mélanges ou mélanges comme PA 12/MACMI, PA 66/6I/6T, MXD 6/6, des acides gras dimérisés avec 36 et 44 atomes de C pouvant être aussi utilisés comme monomères.

7. Masses moulées en polyamide thermoplastiques selon la revendication 6, **caractérisées en ce que** le mélange de polyamide se présente sous forme de mélange mono- ou polyphasique, qui contient le cas échéant des agents de compatibilisation et/ou des modificateurs de viscosité.

8. Masses moulées en polyamide thermoplastiques selon la revendication 7, **caractérisées en ce que** le (co)polyamide est un mélange de polyamide constitué de polyamide 12 et d'un copolyamide amorphe ou d'un polyamide semi-aromatique.

9. Masses moulées en polyamide thermoplastiques selon l'une quelconque des revendications 1 à 8, **caractérisées en ce qu'**elles contiennent les additifs usuels seuls ou combinés, qui sont choisis dans le groupe constitué par les régulateurs de viscosité, les polymères étrangers, les adhésifs, les agents ignifuges, les agents renforçants comme le verre ou les fibres de C, ainsi que les stabilisants contre la dégradation due à la lumière, la chaleur, les intempéries, les minéraux et les auxiliaires de transformation, les colorants et la suie.

10. Masses moulées en polyamide thermoplastiques selon l'une quelconque des revendications 1 à 9, **caractérisées en ce qu'**elles contiennent en sus des plastifiants, en particulier du groupe des plastifiants amide d'acide benzènesulfonique ou toluènesulfonique, particulièrement préférentiellement du N,N-dibutylbenzènesulfonamide et/ou du N-dibutyltoluène-sulfonamide, en particulier en des quantités de 0,5 à 15% en poids, par rapport au poids total du composant de matrice polyamide.

11. Masses moulées en polyamide thermoplastiques selon l'une quelconque des revendications 1 à 10, **caractérisées en ce qu'**elles contiennent des charges nanoscalaires.

12. Procédé de fabrication de masses moulées en polyamide selon l'une quelconque des revendications 1 à 11, **caractérisé en ce que** l'on place le composé aprotique sur un granulé en (co)polyamide et que l'on mélange celui-ci, de préférence à température plus élevée, jusqu'à ce que le composé soit diffusé dans le granulé.

13. Procédé selon la revendication 11, **caractérisé en ce que** le procédé est réalisé dans la plage allant de la température ambiante jusqu'à 160°C au maximum, en particulier de 60 à 120°C.

14. Procédé de fabrication de masses moulées en polyamide selon la revendication 1 à 11, **caractérisé en ce que** l'on incorpore le composé aprotique en une proportion élevée de 3 à 30% en poids dans la matrice polyamide et que l'on utilise ce granulé ensuite comme mélange maître.

15. Procédé de fabrication des masses moulées en polyamide selon l'une quelconque des revendications 1 à 11 et 14, **caractérisé en ce que** l'on incorpore le composé aprotique en continu pendant une opération d'extrusion, de préférence en utilisant une extrudeuse bivis, une extrudeuse appelée ZSK, en particulier également en même temps que d'autres ingrédients de la formule dans la matrice en polyamide constituée de (co)polyamide avec au moins 20% en poids de motifs de polyamide 12.

16. Utilisation des masses moulées en polyamide selon la revendication 1 à 11 pour le reformage thermoplastique en objets d'usage dans des procédés discontinus, en particulier dans le moulage par injection, et dans des procédés continus comme l'extrusion en feuilles, fibres, tubes et gaines, **caractérisée en ce qu'**aucun dépôt de matières solides ne se forme lors du reformage.
